# EUROPEAN PATENT APPLICATION

(11) **EP 4 787 704 A1**
(43) Date of publication of application: **05.08.2026**
(21) Application number: 24870867.9
(22) Date of filing: 26.09.2024
(51) Int. Cl.: H02P 25/16, H02P 6/08

(54) **CIRCUIT FOR SIGNAL TRANSMISSION, CONTROL CIRCUIT AND MOTOR CONTROL SYSTEM**

(30) Priority: 28.09.2023 CN 202311292689
(71) Applicant: Valeo Schalter und Sensoren GmbH, 74321 Bietigheim-Bissingen (DE)
(72) Inventor: WANG, Ning, Shenzhen, Guangdong 518128 (CN); ZHANG, Ke, Shenzhen, Guangdong 518128 (CN); XIAO, Yi, Shenzhen, Guangdong 518128 (CN); LIU, Chun, Shenzhen, Guangdong 518128 (CN)
(74) Representative: Valeo Schalter und Sensoren
(86) International application number: PCT/CN2024/121398
(87) International publication number: WO 2025/067327

(57) **Abstract**

Provided are a circuit for signal transmission, a control circuit, and a motor control system. The circuit is used for transmitting a power supply signal to a device side via a shared wiring, and receiving a pulse width modulation (PWM) signal from the device side via the shared wiring, so as to transmit the PWM signal to a controller. The circuit comprises: a first sub-circuit, used for, on the basis of a source power supply signal and a first conversion PWM signal, obtaining a second conversion PWM signal and transmitting the second conversion PWM signal to a controller, wherein the second conversion PWM signal and the first conversion PWM signal have the same duty ratio and switching frequency as the PWM signal; and a second sub-circuit, used for, on the basis of the PWM signal and the source power supply signal, together with the first sub-circuit, generating the first conversion PWM signal, wherein the first conversion PWM signal is further used for maintaining the second sub-circuit to output the power supply signal to the device side.

## Description

### Technical Field

The present application relates to the field of circuits, in particular to a circuit for signal transmission between a controller and a device, a control circuit and a motor control system.

### Background

In a motor vehicle, it is usually necessary to measure the speed of an electric motor. A Hall sensor is a device that is commonly used to measure the speed of electric motors. The output signal of a Hall sensor is a PWM signal which varies as the electric motor rotates. In addition, Hall sensors may also be used to measure current in other circuit elements within the motor vehicle. In the process of the electric motor performing a driving action, the PWM signal (related to electric motor rotation speed) outputted by the Hall sensor needs to return to a controller (e.g. an MCU), to enable the controller to analyse the state of the electric motor.

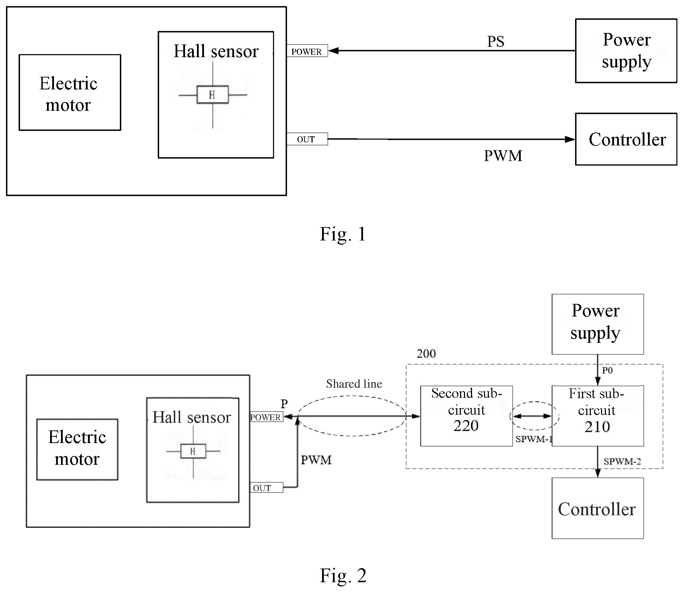

The Hall sensor requires a power supply during operation, so there will generally be an external power supply to supply a power supply signal to the Hall sensor. In addition, as stated above, the Hall sensor also needs to feed the PWM signal associated with electric motor rotation speed back to the controller, so the feedback PWM signal must also be transmitted back to the controller via an additional line, as shown in Fig. 1. Although the electric motor side (including the electric motor and the Hall sensor) is shown as being directly connected to the power supply and the controller in Fig. 1, signal processing circuits may be separately provided between the power supply and the electric motor side, and between the controller and the electric motor side, so that the two types of signals can meet the input signal requirements of the electric motor side and the controller respectively.

It should be noted that the abovementioned Hall sensor is merely an exemplary component in the motor vehicle. It is also possible for other components to be present, or for components to also be present in other application scenarios, that need to be supplied with power via respective lines and/or need to feed PWM signals back to a controller via respective lines.

However, an excessive number of lines might result in more complex circuit layout and higher costs, so a solution capable of reducing the number of lines is required.

### Summary

According to one aspect of the present application, a circuit is provided, configured to transmit a power supply signal to a device side via a shared line, and receive a pulse width modulation (PWM) signal from the device side via the shared line, so as to transmit the PWM signal to a controller, the circuit comprising: a first sub-circuit, configured to obtain a second converted PWM signal on the basis of a source power supply signal and a first converted PWM signal, and transmit the second converted PWM signal to the controller, the second converted PWM signal and the first converted PWM signal having the same duty ratio and switching frequency as the PWM signal; and a second sub-circuit, configured to generate the first converted PWM signal on the basis of the PWM signal and the source power supply signal, wherein the first converted PWM signal is also used to maintain the output of the power supply signal to the device side by the second sub-circuit.

According to embodiments of the present application, the first sub-circuit comprises a power transmission circuit and a switching circuit, wherein the power transmission circuit is configured to transmit the source power supply signal and control an amplitude of the first converted PWM signal, to enable the switching circuit to perform switching, and the switching circuit is configured to perform switching on the basis of the first converted PWM signal, so as to transmit to the controller the second converted PWM signal having the same duty ratio and switching frequency as the first converted PWM signal.

According to embodiments of the present application, a first end of the power transmission circuit and a first end of the switching circuit are connected to the power supply, wherein a switching control end of the switching circuit and a second end of the power transmission circuit are connected to a first end of the second sub-circuit, and a second end of the switching circuit is configured to output the second converted PWM signal, and wherein a signal at the switching control end of the switching circuit and the second end of the power transmission circuit is the first converted PWM signal.

According to embodiments of the present application, the power transmission circuit comprises a first resistor and a first capacitor connected in parallel; and the switching circuit comprises a first transistor, wherein a control electrode of the first transistor serves as the switching control end of the switching circuit, a first electrode of the first transistor serves as the first end of the switching circuit, and a second electrode serves as the second end of the switching circuit.

According to embodiments of the present application, the second sub-circuit comprises a signal conversion circuit,
wherein the signal conversion circuit is configured to convert a voltage signal serving as the first converted PWM signal to a current signal serving as the power supply signal; and wherein the signal conversion circuit is further configured to receive the PWM signal, and generate the first converted PWM signal on the basis of the source power supply signal and the PWM signal.

According to embodiments of the present application, the signal conversion circuit comprises a second resistor, a third resistor, a second transistor and a clamping circuit; a first end of the second resistor serves as the first end of the second sub-circuit, and is connected to the first sub-circuit and a first end of the clamping circuit, and a second end of the second resistor is connected to a first electrode of the second transistor; a control electrode of the second transistor is connected to a second end of the clamping circuit and a first end of the third resistor, and a second electrode of the second transistor serves as a second end of the signal conversion circuit; a second end of the third resistor is connected to a reference voltage end or an enable circuit, wherein the enable circuit is configured to control whether the second transistor is switched on, and thereby control whether the second sub-circuit is activated; and the clamping circuit is configured to maintain a voltage difference between the first electrode and the control electrode of the second transistor, so that the second transistor operates in the saturation region to output a constant current signal as the power supply signal.

According to embodiments of the present application, the circuit further comprises: an enable circuit, configured to control, in response to an enable control signal from the controller, whether the second sub-circuit is activated.

According to embodiments of the present application, the circuit further comprises: a voltage regulating circuit, configured to subject the second converted PWM signal outputted by the first sub-circuit to voltage regulation, so that an amplitude of the second converted PWM signal is the same as an amplitude of the PWM signal.

According to embodiments of the present application, the circuit further comprises: a filter circuit, configured to filter the power supply signal outputted by the second sub-circuit.

According to embodiments of the present application, the device side comprises a Hall sensor which, once operating on the basis of the power supply signal, is configured to measure a speed of an electric motor, so as to feed back to the circuit via the shared line the PWM signal indicating a rotation speed of the electric motor.

According to another aspect of the present application, a control circuit is provided, comprising a controller and the above-described circuit for signal transmission.

According to another aspect of the present application, a motor control system is provided, comprising: an electric motor; a Hall sensor, configured to measure a speed of the electric motor, and generate a pulse width modulation (PWM) signal associated with a rotation speed of the electric motor; a controller; and the circuit according to the above aspect, configured to supply a power supply signal to the Hall sensor via a shared line, and receive the PWM signal from the Hall sensor via the shared line, so as to transmit the PWM signal to the controller.

In the circuit for signal transmission according to the present application, the power supply signal can be supplied to the device side and the PWM signal can be received from the device side via a shared bus, so there is no need to further separately provide a line for supplying the power supply signal and a line for feeding back the PWM signal. Thus, the number of lines is reduced, and costs can thereby be reduced. In addition, the circuit also enables regulation of the power supply signal supplied to the device side and the PWM signal to be inputted to the controller, so as to meet different signal input requirements.

According to another aspect of the present application, a domain controller is further provided, comprising the circuit for signal transmission as described above.

According to another aspect of the present application, a motor vehicle is further provided, comprising: the circuit according to the present invention as described above; and/or the control circuit according to the present invention as described above; and/or the motor control system according to the present invention as described above.

It should be understood that the general description above and the detailed description below are both exemplary, and intended to provide further explanation of the claimed technology.

### Brief Description of the Drawings

Embodiments of the present disclosure are described in further detail with reference to the drawings, to clarify the above and other objectives, features and advantages of the present disclosure. The drawings are intended to provide further understanding of embodiments of the present disclosure, and form part of this Description, being used to explain the present disclosure together with embodiments of the present disclosure, without limiting it. In the drawings, identical reference labels generally denote identical components or steps.
Fig. 1 shows a schematic diagram of signal transmission between a controller and a Hall sensor according to an embodiment.
Fig. 2 shows a schematic structural diagram of a control system according to embodiments of the present application, including a schematic diagram of a circuit for transmitting signals via a shared line.
Fig. 3 shows a further schematic structural diagram of the circuit in Fig. 2.
Fig. 4 shows a specific circuit diagram of the various parts of the circuit in Fig. 2.
Fig. 5 shows a schematic diagram of a control circuit according to embodiments of the present application.
Fig. 6 shows a schematic diagram of a motor vehicle according to embodiments of the present application.

### Detailed Embodiments

The technical solutions in embodiments of the present disclosure are described clearly and completely below in conjunction with the drawings in embodiments of the present disclosure. Clearly, the embodiments described are merely some, not all of the embodiments of the present disclosure. All other embodiments obtained by those skilled in the art on the basis of embodiments in the present disclosure without inventive effort are included in the scope of protection of the present disclosure.

In the present application, a description relating to the connection of a first element to a second element may mean that the first element and the second element are directly connected, or indirectly connected via one or more third element, as long as this is achievable from the perspective of circuit function.

Fig. 2 shows a schematic structural diagram of a control system according to embodiments of the present application, including a schematic diagram of a circuit for transmitting signals via a shared line.

The circuit 200 shown in Fig. 2 is configured to supply a power supply signal P to a device side (e.g. a Hall sensor for electric motor speed measurement) via the shared line, and receive a pulse width modulation (PWM) signal PWM from the device side via the shared line, so as to transmit the PWM signal to the controller. The controller is for example a microprocessor, a microcontroller unit, a digital controller, an application specific integrated circuit, or any integrated circuit with processing ability and capable of outputting a control signal.

As shown in Fig. 2, the circuit 200 comprises a first sub-circuit 210 and a second sub-circuit 220.

The first sub-circuit 210 is configured to obtain a second converted PWM signal SPWM-2 on the basis of a received source power supply signal P0 and a first converted PWM signal SPWM-1, and transmit the second converted PWM signal SPWM-2 to the controller. The first converted PWM signal SPWM-1 and the second converted PWM signal SPWM-2 have the same switching frequency and duty ratio as the PWM signal received from the device side via the shared line.

The second sub-circuit 220 is configured to generate the first converted PWM signal SPWM-1 together with the first sub-circuit on the basis of the source power supply signal P0 and the PWM signal received via the shared line, wherein the first converted PWM signal is also used to maintain the output of the power supply signal P to the device side by the second sub-circuit.

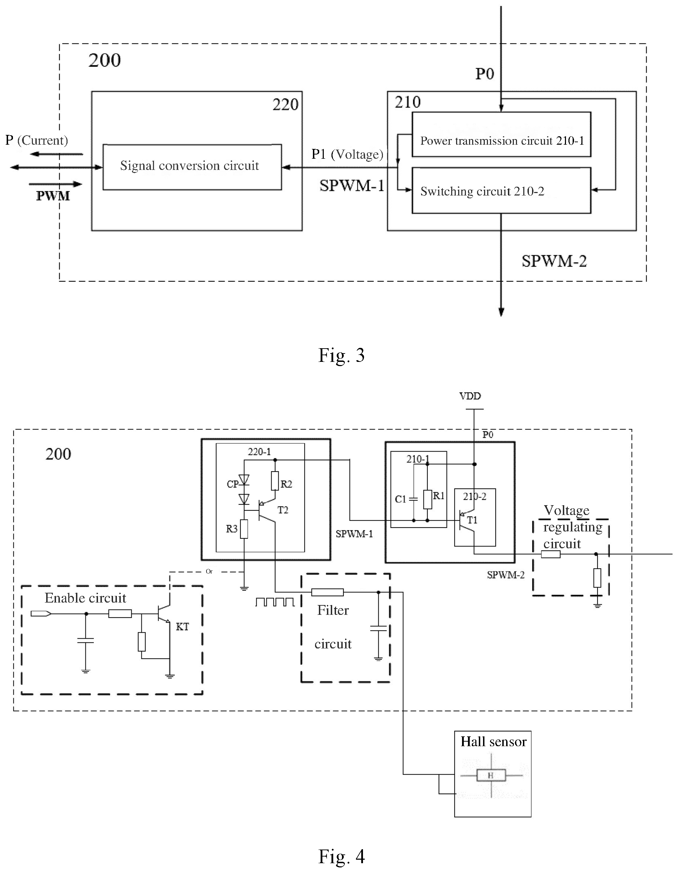

Further, as shown in Fig. 3, the first sub-circuit 210 may comprise a power transmission circuit 210-1 and a switching circuit 210-2. The power transmission circuit 210-1 is configured to transmit the source power supply signal P0 from a power supply and, together with the second sub-circuit, control an amplitude of the first converted PWM signal, to enable the switching circuit to perform switching. The switching circuit 210-2 is configured to perform switching on the basis of the first converted PWM signal, e.g. perform switching according to switching between a first level and a second level of the PWM signal, so as to supply to the controller the second converted PWM signal having the same duty ratio and switching frequency as the first converted PWM signal. The power supply may be within the circuit 200, but may also be outside the circuit 200.

For example, a first end of the power transmission circuit 210-1 in the first sub-circuit 210 and a first end of the switching circuit 210-2 may be connected to the power supply, to receive the source power supply signal (with voltage value VDD) from the power supply. Moreover, a switching control end of the switching circuit 210-2 and a second end of the power transmission circuit 210-1 are connected to a first end of the second sub-circuit, and a second end of the switching circuit 210-2 is configured to output the second converted PWM signal SPWM-2. The signal at the switching control end of the switching circuit 210-2 and the second end of the power transmission circuit 210-1 is the first converted PWM signal SPWM-1.

The second sub-circuit 220 comprises a signal conversion circuit, which is configured to convert a voltage signal serving as the first converted PWM signal SPWM-1 to a current signal serving as the power supply signal that supplies power to the device side (the Hall sensor). That is to say, the signal conversion circuit may be a voltage-current conversion circuit. In addition, the signal conversion circuit is also configured to generate the first converted PWM signal SPWM-1 together with the first sub-circuit on the basis of the PWM signal fed back from the device side and the source power supply signal. Optionally, the second sub-circuit may comprise a current-limiting element, so that a current outputted from the second sub-circuit will not be too large, and the device side serving as a load thereof can thus be protected.

As can be seen, the second sub-circuit can use power received via the first sub-circuit from the source power supply signal to generate and maintain the power supply signal to the device side. The first sub-circuit and the second sub-circuit can form a series-connected pathway between the power supply and the device side, and can generate the first converted PWM signal at a series connection node on the basis of the source power supply signal and the PWM signal. The first converted PWM signal can have the same switching frequency and duty ratio as the feedback PWM signal, and is then converted, via the switching circuit in the first sub-circuit, to the second converted PWM signal having the same switching frequency and duty ratio as the feedback PWM signal, for output to the controller. The power supply signal can be supplied to the device side and the PWM signal can be received from the device side via a shared bus, so there is no need to further separately provide a line for supplying the power supply signal and a line for feeding back the PWM signal. Thus, the number of lines is reduced.

Optionally, as an example, the specific circuitry of each part of the circuit described with reference to Figs. 2 - 3 is described below in conjunction with Fig. 4.

More specifically, the power transmission circuit 210-1 comprises a first resistor R1 and a first capacitor C1 connected in parallel. The switching circuit 210-2 comprises a first transistor T1, wherein a control electrode of the first transistor T1 serves as the switching control end of the switching circuit 210-2, a first electrode of the first transistor T1 serves as the first end of the switching circuit 210-2, and a second electrode serves as the second end of the switching circuit 210-2.

The signal conversion circuit 220-1 of the second sub-circuit 220 comprises a second resistor R2, a third resistor R3, a second transistor T2 and a clamping circuit CP. It should be noted that the resistors in the drawings of the present application are shown as single resistors, but may be obtained by connecting a greater number of resistors in series, in parallel, or in series and parallel.

A first end of the second resistor R2 serves as the first end of the second sub-circuit 220, and is connected to the first sub-circuit 210 (e.g. to the second end of the power transmission circuit in the first sub-circuit) and a first end of the clamping circuit CP, and a second end of the second resistor R2 is connected to a first electrode of the second transistor T2.

A control electrode of the second transistor T2 is connected to a second end of the clamping circuit CP and a first end of the third resistor R3, and a second electrode of the second transistor T2 serves as a second end of the signal conversion circuit 220-1. A second end of the third resistor R3 is connected to a reference voltage end (e.g. having a ground voltage) or an enable circuit, wherein the enable circuit is configured to control whether the second transistor T2 is switched on, and thereby control whether the second sub-circuit 220 is activated. The clamping circuit is configured to maintain a voltage difference between the first electrode and the control electrode of the second transistor T2, so that the second transistor T2 is switched on to output a constant current signal as the power supply signal. As can be seen, the second transistor T2 operates in the saturation region, so that the output current is within a suitable range. Thus, the device side acting as the load thereof can be protected, and the power supply signal requirement of the load can be met.

The operating process of the circuit 200 is described in conjunction with the circuit in Fig. 4.

Firstly, with regard to the process of supplying power to the device side (e.g. the Hall sensor), suppose that the second sub-circuit is operating normally; for example, the enable circuit outputs a LOW level, or the third resistor of the second sub-circuit is directly connected to the reference voltage end. The power supply supplies the power supply signal P0 (with power supply voltage VDD) to the first sub-circuit, and the first resistor R1 (and the first capacitor C1 connected in parallel therewith) in the power transmission circuit 210-1 can transmit power to the second sub-circuit, thus enabling the clamping circuit CP to cause the second transistor to operate in the saturation region, so that the second transistor T2 is switched on and outputs a constant current to the device side. At this time, when the second transistor T2 is switched on, a signal at the second electrode of the second transistor T2 comprises the PWM signal fed back from the device side. Correspondingly, the PWM signal will be transmitted via the switched-on second transistor T2 to the first electrode of the second transistor T2. Since the current flowing through the second resistor R2 is a constant current, a signal at the first end of the second resistor R2 (i.e. the first end of the second sub-circuit) is also a PWM signal, i.e. the first converted PWM signal.

As can be seen from Fig. 4, if the second transistor T2 remains switched on, the amplitude of the first converted PWM signal SPWM-1 may for example be expressed as Vpwm + I_{R2}*R2 relative to the reference voltage end, where Vpwm is the voltage value of the feedback PWM signal and varies at the switching frequency of the PWM signal, R2 denotes the resistance value of the second resistor in the second sub-circuit, and I_{R2} is the value of constant current flowing through the second resistor R2. As can be seen, the amplitude of the first converted PWM signal can switch between a non-0 first amplitude and a second amplitude. Thus, for a fixed voltage value of Vpwm, the value of the second resistor R2 is suitably set so that the amplitude range of the first converted PWM signal can keep the clamping circuit of the second sub-circuit operating normally, so that the second transistor T2 remains switched on and is guaranteed to operate in the saturation region.

The constant current signal outputted to the device side by the second sub-circuit serves as the power supply signal P to be supplied to the device side. If the device side also requires power to be supplied as voltage, the constant current signal can be further converted to a voltage signal to supply power to the device side.

Next, regarding the process by which the PWM signal received from the device side is fed back to the controller, as stated above, the amplitude of the first converted PWM signal SPWM-1 may for example be expressed as Vpwm + I_{R2}*R2 relative to the reference voltage end, and has the first amplitude and the second amplitude as the amplitude of the PWM signal varies. The first converted PWM signal, when at the first amplitude, can switch on the first transistor T1 in the switching circuit (e.g. VDD is greater than the first amplitude) so that the voltage value at the second electrode of the first transistor can essentially be VDD, and when at the second amplitude, can switch off the first transistor T1 (e.g. VDD is less than the second amplitude) so that no voltage is outputted or the output voltage value is 0 at the second electrode of the first transistor. Thus, a PWM signal, specifically the second converted PWM signal, can also be outputted at the second electrode of the first transistor (i.e. the second end of the switching circuit, and the output end of the first sub-circuit 210). The amplitude of the second converted PWM signal switches between 0 and the voltage value VDD of the source power supply signal P0. Moreover, the PWM signal and the second converted PWM signal have the same switching frequency and duty ratio. Thus, through the second converted PWM signal, the controller can also obtain information relating to the feedback PWM signal, e.g. information on the measured rotation speed of the electric motor.

Thus, the circuit allows the power supply signal to be supplied to the device side and the PWM signal to be received from the device side via a shared bus, so there is no need to further separately provide a line for supplying the power supply signal and a line for feeding back the PWM signal. Thus, the number of lines is reduced.

Optionally, to improve the functionality of the circuit, the circuit may also comprise other parts.

Still as shown in Fig. 4, based on the circuit structure shown in Fig. 2, the circuit 200 may further comprise an enable circuit, configured to control, in response to an enable control signal from the controller, whether the second sub-circuit is activated. For example, the second transistor can be switched off by supplying a disable signal to the control electrode of the second transistor of the second sub-circuit, so that the second sub-circuit is not activated, so that the entire circuit shown in Fig. 2 will not operate. That is to say, if the enable circuit is not introduced, the second sub-circuit and the entire circuit shown in Fig. 2 both remain operational, and their normal operation is stopped by another method of control.

Optionally, for example, the enable circuit may comprise an enable control transistor KT, a control electrode of the control transistor being connected to a pin of the controller for example, so as to receive the enable control signal from the controller. A first electrode of the control transistor is connected to the second end of the third resistor R3 of the second sub-circuit, and a second electrode is connected to the reference voltage end (e.g. having the ground voltage). Optionally, a capacitor is provided between the control electrode of the control transistor and the reference voltage end, for voltage stabilization and filtering. In addition, a voltage divider circuit (resistors) is also provided between an input end of the enable circuit and the reference voltage end, to limit current and reduce the control electrode voltage, thus protecting the transistor.

Referring to the specific structure of the signal conversion circuit in Fig. 4, when the controller applies a valid signal to the control electrode of the control transistor, the control transistor is switched on, so that the second end of the third resistor R3 in the signal conversion circuit is connected to the reference voltage end, so that the second sub-circuit 220 can operate normally. Conversely, when the controller does not apply a valid signal to the control electrode of the control transistor, the control transistor is switched off, so that the second end of the third resistor R3 is suspended, so that the second sub-circuit does not operate.

In addition, the circuit 200 may also comprise a voltage regulating circuit, such as a voltage divider circuit. As described in relation to the operating process of the circuit structure in Fig. 4, the feedback PWM signal is converted by the second sub-circuit 220 to obtain the first converted PWM signal and the second converted PWM signal. The periods of these three PWM signals can essentially be considered to be in synchrony, but their amplitudes might vary somewhat. For example, the amplitude of the first converted PWM signal finally outputted to the controller switches between 0 and the voltage value VDD of the power supply signal of the power supply, whereas the amplitude of the feedback PWM signal received via the shared line might not. Thus, voltage amplitude regulation can be performed by means of the voltage regulating circuit.

Moreover, the power supply signal outputted by the circuit 200 can be outputted after signal conversion or shaping in the second sub-circuit, for example using a transistor to output a constant current signal, so as to meet a power supply signal requirement of the device side. In addition, as a result of the PWM signal fed back by the device side being converted by the circuit 200 and finally outputted in the form of the second converted PWM signal, it can also be ensured that the second converted PWM signal meets an input requirement of the controller.

In addition, the circuit 200 may further comprise a filter circuit, e.g. an RC filter, for filtering the power supply signal outputted by the second sub-circuit, to obtain a filtered power supply signal to be supplied to the device side for it to use.

In summary, signal transmission by the circuit 200 can be made more effective by additionally including these additional circuits.

According to another aspect of the present application, a control circuit is further provided.

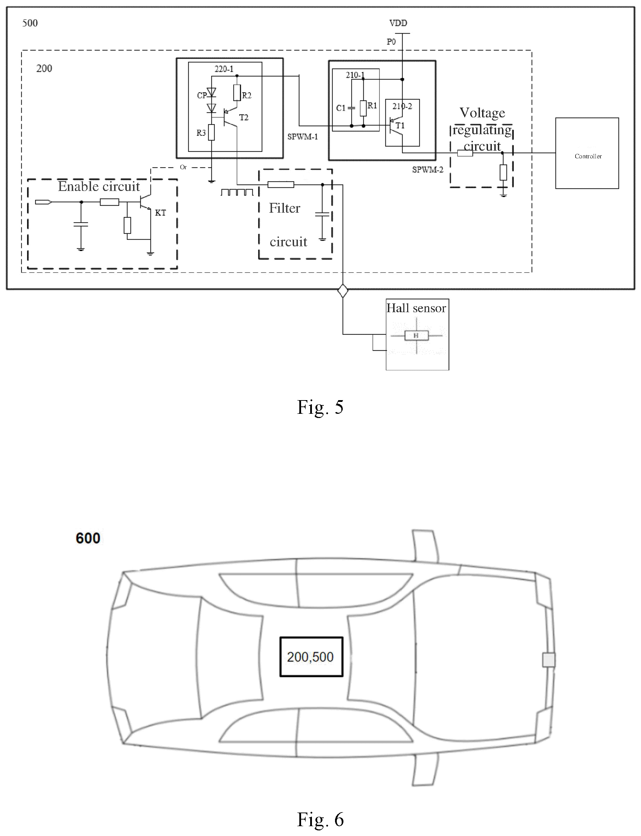

Fig. 5 shows a schematic structural diagram of a control circuit according to embodiments of the present application.

As shown in Fig. 5, the control circuit 500 may comprise a controller and a circuit for transmitting signals via a shared line, wherein the circuit for transmitting signals via a shared line may be the circuit 200 as described above with reference to Figs. 2 - 4.

The control circuit 500 may be an integrated circuit, having an input/output port for connection to the shared line. Thus, the circuit 200 can supply the power supply signal to the device side (e.g. the Hall sensor) via the input/output port and the shared line, and can receive the feedback PWM signal from the device side via the input/output port and the shared line, and convert same to obtain the second converted PWM signal to be supplied to the controller. Fig. 5 shows the power supply as being in the control circuit, but the power supply could also be outside the control circuit.

Thus, the number of ports of the control circuit 500 can be reduced, and it is thus possible to reduce costs and layout complexity.

A domain controller or zone controller is the core of each functional domain of a motor vehicle, and mainly consists of three parts, specifically a domain main control processor, an operating system, and application software and algorithms. Relying on the high-performance domain main control processor, abundant hardware interface resources and powerful software function characteristics, the domain controller can integrate core functions that originally required a large number of motor vehicle control units (ECU) for implementation, considerably increasing the degree of integration of system functions, and to this are added standardized interfaces for data exchange; thus, development and manufacturing costs in this sector can be reduced considerably. The circuit described herein can be used in a domain controller or zone controller.

According to another aspect of the present application, a motor vehicle is further provided.

Fig. 6 shows a schematic structural diagram of a motor vehicle according to embodiments of the present application.

As shown in Fig. 6, a motor vehicle 600 according to the present application comprises: the circuit 200 according to the present invention as described above; and/or the control circuit 500 according to the present invention as described above; and/or the motor control system according to the present invention as described above. For a detailed description of the motor vehicle 600 according to the present application, reference can made to the description of Figs. 2 - 5 in the present application, which will not be repeated here for the sake of brevity.

Although the present subject matter has been described in detail for various specific exemplary embodiments thereof, each example is provided by way of explaining rather than restricting the present disclosure. Having gained an understanding of the content above, those skilled in the art could easily make alterations and changes to such embodiments, and equivalents thereof. Therefore, the present invention does not rule out the inclusion of such modifications, changes and/or additions to the present subject matter which would be obvious to those skilled in the art. For example, a feature illustrated or described as part of one embodiment could be used with another embodiment to produce a further embodiment. Therefore, it is intended that the present disclosure cover such alterations, changes and equivalents.

Specifically, although the drawings of the present disclosure describe steps performed in a specific order for the purpose of illustration and discussion, the method of the present disclosure is not limited to the order or arrangement specifically illustrated. Without departing from the scope of the present disclosure, various steps of the method described above can be omitted, rearranged, combined and/or adjusted in various ways.

Unless otherwise defined, all of the terms (including technical and scientific terms) used herein have the same meanings as commonly understood by those skilled in the art. It should also be understood that terms such as those defined in a typical dictionary should be interpreted as having the same meanings as in the context of the related art, rather than being interpreted in an idealized or extremely formalized sense, unless expressly so defined herein.

The above is a description of the present disclosure and should not be regarded as limiting it. Although several exemplary embodiments of the present disclosure have been described, it will be readily understood by those skilled in the art that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. Circuit for signal transmission, configured to transmit a power supply signal to a device side via a shared line, and receive a pulse width modulation (PWM) signal from the device side via the shared line, so as to transmit the PWM signal to a controller, the circuit comprising:
a first sub-circuit, configured to obtain a second converted PWM signal on the basis of a source power supply signal and a first converted PWM signal, and transmit the second converted PWM signal to the controller, the second converted PWM signal and the first converted PWM signal having the same duty ratio and switching frequency as the PWM signal; and
a second sub-circuit, configured to generate the first converted PWM signal together with the first sub-circuit on the basis of the PWM signal and the source power supply signal, wherein the first converted PWM signal is also used to maintain the output of the power supply signal to the device side by the second sub-circuit.

2. Circuit according to Claim 1, wherein the first sub-circuit comprises a power transmission circuit and a switching circuit,
wherein the power transmission circuit is configured to transmit the source power supply signal and, together with the second sub-circuit, control an amplitude of the first converted PWM signal, to enable the switching circuit to perform switching, and
the switching circuit is configured to perform switching on the basis of the first converted PWM signal, so as to transmit to the controller the second converted PWM signal having the same duty ratio and switching frequency as the first converted PWM signal.

3. Circuit according to Claim 2, wherein a first end of the power transmission circuit and a first end of the switching circuit are connected to the power supply, and
wherein a switching control end of the switching circuit and a second end of the power transmission circuit are connected to a first end of the second sub-circuit, and a second end of the switching circuit is configured to output the second converted PWM signal,
wherein a signal at the switching control end of the switching circuit and the second end of the power transmission circuit is the first converted PWM signal.

4. Circuit according to Claim 3, wherein :
the power transmission circuit comprises a first resistor and a first capacitor connected in parallel; and
the switching circuit comprises a first transistor, wherein a control electrode of the first transistor serves as the switching control end of the switching circuit, a first electrode of the first transistor serves as the first end of the switching circuit, and a second electrode serves as the second end of the switching circuit.

5. Circuit according to Claim 1, wherein the second sub-circuit comprises a signal conversion circuit,
wherein the signal conversion circuit is configured to convert a voltage signal serving as the first converted PWM signal to a current signal serving as the power supply signal;
wherein the signal conversion circuit is further configured to receive the PWM signal, and generate the first converted PWM signal together with the first sub-circuit on the basis of the source power supply signal and the PWM signal.

6. Circuit according to Claim 5, wherein the signal conversion circuit comprises a second resistor, a third resistor, a second transistor and a clamping circuit;
a first end of the second resistor serves as the first end of the second sub-circuit, and is connected to the first sub-circuit and a first end of the clamping circuit, and a second end of the second resistor is connected to a first electrode of the second transistor;
a control electrode of the second transistor is connected to a second end of the clamping circuit and a first end of the third resistor, and a second electrode of the second transistor serves as a second end of the signal conversion circuit;
a second end of the third resistor is connected to a reference voltage end or an enable circuit, wherein the enable circuit is configured to control whether the second transistor is switched on, and thereby control whether the second sub-circuit is activated; and
the clamping circuit is configured to maintain a voltage difference between the first electrode and the control electrode of the second transistor, so that the second transistor operates in the saturation region to output a constant current signal as the power supply signal.

7. Circuit according to Claim 1, further comprising:
an enable circuit, configured to control, in response to an enable control signal from the controller, whether the second sub-circuit is activated.

8. Circuit according to Claim 1, further comprising:
a voltage regulating circuit, configured to subject the second converted PWM signal outputted by the first sub-circuit to voltage regulation, so that an amplitude of the second converted PWM signal is the same as an amplitude of the PWM signal.

9. Circuit according to Claim 1, further comprising:
a filter circuit, configured to filter the power supply signal outputted by the second sub-circuit.

10. Circuit according to Claim 1, wherein the device side comprises a Hall sensor which, once operating on the basis of the power supply signal, is configured to measure a speed of an electric motor, so as to feed back to the circuit via the shared line the PWM signal indicating a rotation speed of the electric motor.

11. Domain controller, comprising the circuit for signal transmission according to any one of Claims 1 - 10.

12. Control circuit, comprising:
a controller; and
the circuit for signal transmission according to any one of Claims 1 - 10.

13. Motor control system, comprising:
an electric motor;
a Hall sensor, configured to measure a speed of the electric motor, and generate a pulse width modulation (PWM) signal indicating a rotation speed of the electric motor;
a controller; and
the circuit according to any one of Claims 1 - 10, connected to the Hall sensor via a shared bus, and configured to transmit a power supply signal to the Hall sensor via the shared line, and receive the PWM signal from the Hall sensor via the shared line, so as to transmit the PWM signal to the controller.

14. Motor vehicle, comprising
the circuit according to any one of Claims 1 - 10; and/or
the domain controller according to Claim 11; and/or
the control circuit according to Claim 12; and/or
the motor control system according to Claim 13.
